# EUROPÄISCHE PATENTSCHRIFT

(11) **EP 2 097 605 B1**
(45) Veröffentlichungstag und Bekanntmachung des Hinweises auf die Patenterteilung: **27.07.2011**
(21) Anmeldenummer: 07819279.6
(22) Anmeldetag: 24.10.2007
(51) Int. Cl.: E06B 3/673, B29B 7/60, B01F 15/04, B01F 7/00

(54) **Verfahren und Verwendung einer Vorrichtung zum Einspritzen eines Stranges aus einer pastösen Masse in den Zwischenraum zwischen zwei Glasplatten einer Isolierglasscheibe**
Method and use of a device for injecting a strand of a pasty material into the intermediate space between two glass panes of an insulating glass plate
Procédé et utilisation d'un dispositif d'injection d'une barre de pâte dans l'espace intermédiaire entre deux plaques de verre d'un vitrage isolant

(30) Priorität: 24.10.2006 DE 102006051321
(43) Veröffentlichungstag der Anmeldung: 09.09.2009
(73) Patentinhaber: Bystronic Lenhardt GmbH, 75242 Neuhausen-Hamberg (DE)
(72) Erfinder: SCHULER, Peter, 75233 Tiefenbronn (DE)
(74) Vertreter: Twelmeier Mommer & Partner
(86) Internationale Anmeldenummer: PCT/EP2007/009226
(87) Internationale Veröffentlichungsnummer: WO 2008/049600

(56) Entgegenhaltungen:
- EP-A- 0 904 927
- DE-A1- 3 917 207
- DE-A1- 3 929 608
- DE-U1- 29 822 264
- GB-A- 908 519
- US-A- 3 203 675
- US-A- 3 902 850
- US-B1- 6 840 404

## Beschreibung

Die Erfindung geht aus von einem Verfahren mit den im Oberbegriff des Anspruchs 1 angegeben Merkmalen und von der verwendung Vorrichtung mit den im Oberbegriff des Anspruchs 5 Angegebenen Merkmalen. Ein solcher Stand der Technik ist aus der DE 35 42 767 A1 und aus der DE 39 29 608 A1 bekannt, welche eine Vorrichtung zum Fördern von zwei zähflüssigen Substanzen in vorgegebenem Mengenverhältnis aus zwei Vorratsbehältern zu einer oder mehreren Düsen offenbart, mit welcher die Randfuge einer Isolierglasscheibe versiegelt wird. Die beiden zähflüssigen Substanzen, bei denen es sich um die beiden Komponenten einer Zweikomponenten-Dicht- und Klebmasse handelt, werden durch Kolbenpumpen aus Fässern jeweils in einen Zwischenspeicher gefördert, bei welchem es,sich um eine Kolben-Zylinder-Einheit handelt, aus welcher ein erster Kolben die Hauptkomponente (Binder oder Basiskomponente) der Dicht- und Klebmasse und ein zweiter Kolben die Zusatzkomponente (Härter) synchron zur Hauptkomponente presst. Hauptkomponente und Zusatzkomponente werden auf dem Förderweg zwischen der Kolben-Zylinder-Einheit und der Düse durch einen statischen Mischer gefördert, in welchem sie miteinander vermischt werden. Neigt sich der Vorrat der Hauptkomponente und der Zusatzkomponente in der Kolben-Zylinder-Einheit seinem Ende zu, muss der Versiegelungsvorgang der Isolierglasscheibe unterbrochen werden, um die Hauptkomponente und die Zusatzkomponente in die jeweilige Kolben-Zylinder-Einheit nachzufüllen. Während dieser Zeit ist eine Versiegelung von Isolierglasscheiben nicht möglich. Will man Unterbrechungen des Versiegelungsvorgangs vermeiden, muss man das Speichervolumen der Kolben-Zylinder-Einheit möglichst groß wählen. Je größer das Speichervolumen ist, desto schwieriger wird es wegen der unvermeidlichen Kompressibilität der Bestandteile der Dicht- und Klebmasse, diese so genau zu dosieren, dass weder zuviel noch zuwenig von der Masse in die Randfuge der Isolierglasscheibe gelangt. Außerdem steigen mit zunehmendem Speichervolumen das Gewicht der Kolben-Zylinder-Einheiten, der Kraftbedarf für deren Betätigen und damit auch das Gewicht für die Antriebe der Kolben der Kolben-Zylinder-Einheiten. Um die Förderwege von den Kolben-Zylinder-Einheiten zu den Düsen kurz zu halten, ist es bekannt, die Düse und die sie speisenden Kolben-Zylinder-Einheiten auf einem gemeinsamen Träger anzuordnen. Dieser muss beweglich sein, um die Düse am Rand der Isolierglasscheiben entlang bewegen zu können. Der Aufwand für den Bewegungsantrieb steigt ebenfalls mit dem Gewicht der Kolben-Zylinder-Einheiten.

Die US 6,840,404 B1 offenbart ein Dosiersystem zum Dosieren von flüssigen Versiegelungsmitteln, Klebstoffen und dergleichen zum Auftragen auf Automobile und deren Teile, welche aus zwei mit einer Düse verbundenen Kolben-Zylinder-Einheiten ausgepresst werden, welche gegensinnig antreibbar sind.

Der vorliegenden Erfindung liegt die Aufgabe zugrunde, eine Unterbrechung des Versiegelungsvorganges der Isolierglasscheibe durch das Nachfüllen einer Komponente zu vermeiden, wenn sich der Vorrat der Komponente in der Kolben-Zylinder-Einheit dem Ende zu neigt.

Diese Aufgabe wird gelöst durch ein Verfahren mit den im Patentanspruch 1 angegebenen Merkmalen und durch die Verwendung einer Vorrichtung mit den im Patentanspruch 5 angegebenen Merkmalen. Vorteilhafte Weiterbildungen der Erfindung sind Gegenstand der Unteransprüche.

Erfindungsgemäß sind für die pastöse Masse, die in den Zwischenraum zwischen zwei Glastafeln gespritzt werden soll, gegebenenfalls für deren Bestandteile, jeweils zwei mit der Düse verbundene Anordnungen aus einem Speicher und aus einem in diesen eingreifenden Verdränger vorhanden und werden gegensinnig betrieben, d. h., der eine Speicher wird nachgefüllt, während aus dem anderen Speicher die Masse oder ein Bestandteil der Masse in den ersten Förderweg abgegeben wird, welcher zur Düse führt. Das hat wesentliche Vorteile:
• Durch das gegensinnige Betreiben wird der Inhalt jenes Speichers, der gerade nachgefüllt wird, umso größer, je mehr der Inhalt im anderen Speicher abnimmt. Deshalb sind die pastöse Masse oder deren Bestandteile ständig verfügbar, um sie in den Zwischenraum zwischen zwei Glastafeln einer Isolierglasscheibe zu spritzen.
• Die Zeit, die für das Umschalten der Speicher von Nachfüllen auf Abgeben und von Abgeben auf Nachfüllen benötigt wird, ist viel kleiner als die Zeit, die benötigt wird, um einen entleerten Speicher wieder aufzufüllen.
• Weil die Zeit, die für das Auffüllen eines Speichers benötigt wird, nicht von der Zeit verloren geht, in welcher die pastöse Masse in den Zwischenraum zwischen zwei Glastafeln einer Isolierglasscheibe gespritzt werden kann, kann das Speichervolumen der Speicher klein gehalten werden.
• Da das Speichervolumen klein gehalten werden kann, können die Speicher klein und leicht gestaltet werden, so dass der Kraftaufwand für ihre Betätigung und für ihre Handhabung entsprechend klein ist.
• Da das Speichervolumen der Speicher klein gehalten werden kann, ist der Einfluss der Kompressibilität auf die Dosiergenauigkeit der pastösen Masse bzw. ihrer Bestandteile entsprechend gering.
• Die Erfindung ermöglicht eine kompakte Versiegelungsvorrichtung für Isolierglasscheiben, welche sich gut kontrollieren lässt.

Die Erfindung eignet sich nicht nur für zweikomponentige Dicht- und Klebemassen wie z. B. das in der Isolierglasfertigung weit verbreitete Polysulfid, welches aus einem Hauptbestandteil und einem Zusatzbestandteil besteht, die auf dem Weg zur Düse miteinander im Verhältnis von ca. 9 zu 1 zu einer zweikomponentigen pastösen Masse gemischt werden, die danach alsbald fortschreitend abbindet. Die Erfindung eignet sich auch für das Verarbeiten von Silikon-Versiegelungsmassen, die Silikonkautschuk abbinden und ebenfalls für das Versiegeln von Isolierglasscheiben bekannt sind. Die Erfindung eignet sich auch für einkomponentige abbindende Massen, z. B. auf der Basis von Polyurethan. Ferner eignet sich die Erfindung auch für das Verarbeiten thermoplastischer Massen, z. B. auf der Basis von Polyisobutylen, um z. B. eine Isolierglasscheibe mit einem thermoplastischen Abstandhalter herzustellen. Dabei wird ein Strang aus der thermoplastischen Masse heiß auf eine Glastafel entlang des Randes der Glastafel extrudiert und anschließend eine Isolierglasscheibe gebildet, indem eine zweite Glastafel mit dem extrudierten Abstandhalter verklebt wird; näheres dazu offenbart die EP 0 823 531 B1. Ferner eignet sich die Erfindung, um einen Strang aus einem Hotmelt auf eine Glastafel aufzutragen, welche für eine Isolierglasscheibe verwendet wird.

Beim Versiegeln einer Isolierglasscheibe wird in eine Randfuge der Isolierglasscheibe, welche durch zwei Glastafeln und die Außenseite eines die Glastafeln verbindenden Abstandhalters begrenzt ist, eine abbindende Masse gespritzt, die sich entweder als einheitlicher Strang von der einen Glastafel bis zur gegenüberliegenden Glastafel erstreckt oder - bei hinreichend druck- und zugfesten Abstandhaltern - nur in die Kehlen zwischen der Außenseite des Abstandhalters und den beiden Glastafeln eingefüllt ist, so dass sich in der Randfuge zwei getrennte Stränge der Versiegelungsmasse nebeneinander befinden. Zwei solche Stränge können mit einer Düse erzeugt werden, welche zwei nebeneinander liegende Mündungen hat.

Wenn die Masse, die in den Zwischenraum zwischen den Glastafeln einer Isolierglasscheibe gespritzt wird, aus zwei Bestandteilen besteht, die nach der Vermischung eine abbindende Masse bilden, dann befindet sich auf dem ersten Förderweg zwischen den beiden Speichern, aus denen die beiden Bestandteile kommen, und der Düse, aus welcher der Strang der pastösen Masse schließlich austritt, ein Mischer. Ein statischer Mischer, der die beiden Bestandteile miteinander vermischt, während sie durch ihn hindurchgefördert werden, ist zu diesem Zweck an sich bekannt. Beim Verarbeiten einkomponentiger pastöser Massen ist ein Mischer entbehrlich.

Die Düse kann eine oder mehr als eine Mündung haben. Das Arbeiten mit nur einer Mündung kommt infrage, wenn ein einheitlicher Strang aus der pastösen Masse gebildet werden soll. Eine Düse mit zwei Mündungen kommt nicht nur infrage, wenn - wie erwähnt - zwei nebeneinander liegende Stränge gebildet werden sollen, von denen der eine den Abstandhalter mit der einen Glastafel und der andere den Abstandhalter mit der anderen Glastafel verbindet. Eine Düse mit zwei Mündungen kommt auch dann infrage, wenn ein zweischichtiger Verbundstrang aus zwei verschiedenen pastösen Massen gebildet werden soll.

Vorzugsweise werden die paarweise gegensinnig betriebenen Anordnungen, welche aus einem Speicher und aus einem Verdränger bestehen, synchron betrieben, so dass immer dann, wenn aus einem Speicher etwas abgegeben wird, der andere Speicher im gleichen Ausmaß nachgefüllt wird. Grundsätzlich ist es aber auch möglich, von einer strengen Synchronisation abzuweichen und z. B. nicht die gesamte Zeit, in welcher aus einem Speicher eine Masse abgegeben wird, zu nutzen, um den anderen Speicher nachzufüllen; vielmehr könnte die Nachfüllzeit kürzer sein, wenn dafür der Durchsatz beim Nachfüllen entsprechend erhöht wird. Eine solche Vorgehensweise würde jedoch einen erhöhten Aufwand erfordern und ist deshalb nicht bevorzugt.

Werden mehrere pastöse Massen oder mehrere Komponenten einer pastösen Masse verarbeitet, dann soll für jede Masse bzw. für jeden Bestandteil, der separat dosiert wird, ein Paar von gegensinnig betriebenen Anordnungen vorgesehen sein, die jeweils aus einem Speicher und aus einem Verdränger bestehen. In diesem Fall wird eine jede dieser Anordnungen vorzugsweise synchron betrieben.

Zweckmäßigerweise sind die Speicher, die einander für ein paarweise gegensinniges Arbeiten zugeordnet sind, gleich groß. Beim Beginn eines Einspritzvorganges ist dann einer der Speicher mindestens halb voll, so dass für einen ununterbrochenen Einspritzvorgang grundsätzlich das halbe Volumen eines der beiden Speicher zur Verfügung steht. Gemäß der Erfindung wird der Einspritzvorgang, bei welchem die pastöse Masse bzw. deren jeweilige Bestandteile abgegeben werden, jeweils aus demjenigen Speicher eines Paares von Anordnungen, die aus einem Speicher und aus einem Verdränger bestehen, abgegeben, welcher die größere Menge der pastösen Masse bzw. eines ihrer Bestandteile enthält. Dann ist die Wahrscheinlichkeit, dass der anstehende Einspritzvorgang unterbrechungslos zu Ende geführt werden kann, am größten.

Bei einer rechteckigen Isolierglasscheibe ist es bekannt, den Einspritzvorgang an den Ecken der Isolierglasscheibe kurzzeitig zu unterbrechen, während die Düse um die Ecke herum bewegt wird. Diese kurzzeitige Unterbrechung kann dafür genutzt werden, die beiden Speicher eines Paares umzuschalten, so dass anschließend derjenige Speicher, welcher bis zum Erreichen einer Ecke der Isolierglasscheibe Material abgegeben hat, nachgefüllt wird, während der andere Speicher, welcher bis zum Erreichen der Ecke nachgefüllt wurde, danach Material abgibt.

Eine andere vorteilhafte Weiterbildung der Erfindung besteht darin, den Einspritzvorgang so zu steuern, dass die zwischen zwei Pausen der Bewegung der Düse jeweils benötigte Menge der pastösen Masse bzw. ihrer Bestandteile vorab ermittelt und nach Möglichkeit aus demjenigen Speicher eines Paares von Anordnungen, welche aus einem Speicher und einem Verdränger bestehen, abgegeben wird, aus welchem dieses unterbrechungslos möglich ist. Ist das bei beiden Speichern möglich, wird derjenige Speicher für die Abgabe des Materials bevorzugt, welcher die kleinere Menge enthält. Das hat zwei Vorteile: Zum einen wird ein weitgehendes Austauschen des Materials in den Speichern begünstigt und dadurch einer Alterung des Materials in den Speichern entgegengewirkt. Zum anderen ist, wenn ein Speicher nahezu entleert wurde, der andere Speicher nahezu voll und steht für einen längeren unterbrechungsfreien Einspritzvorgang zur Verfügung, wie er für großformatige Isolierglasscheiben infrage kommt.

Die Menge der pastösen Masse, die zwischen zwei Pausen in der Bewegung der Düse benötigt wird, kann in einer zeitgemäßen, automatisch gesteuerten Fertigungslinie für das Zusammenbauen von Isolierglasscheiben leicht vorab ermittelt werden, indem die Länge, Breite und Tiefe einer Randfuge der Isolierglasscheibe vorab ermittelt werden. Das kann entweder messtechnisch geschehen oder dadurch, dass der Steuerung der Fertigungslinie die Daten der zusammenzubauenden Isolierglasscheiben vorab eingegeben werden. Diese Daten sind in der Arbeitsvorbereitung verfügbar.

Die pastöse Masse bzw. deren Bestandteile, die nachgefüllt werden, stammen aus einem oder - wenn mehrere Bestandteile nachgefüllt werden - aus mehreren Gebinden, welche mit dem nachzufüllenden Speicher über einen zweiten Förderweg verbunden werden können, in welchem eine Pumpe angeordnet ist. Zu diesem Zweck sind die Speicher mit einer entsprechenden Anschlussmöglichkeit zum Nachfüllen versehen. Vorzugsweise geschieht das Nachfüllen -über einen Zugang, der auch für das Abgeben von Material aus dem Speicher benutzt wird. Um diese Doppeltausnutzung zu verwirklichen, genügt es, den Zugang zum Speicher über ein Wegeventil vorzunehmen, welches den Zugang abwechselnd mit dem ersten Förderweg zur Düse und mit dem zweiten Förderweg verbindet, der vom Gebinde kommt. Das Wegeventil kann noch eine dritte Stellung haben, in welcher es den Zugang zum Speicher sperrt.

Für das Ausbilden der Speicher gibt es unterschiedliche Möglichkeiten. Eine Möglichkeit besteht darin, als Speicher einen Behälter zu nehmen, in welchem als Verdränger ein Balg untergebracht ist, welcher hydraulisch vergrößert und verkleinert werden kann. Vorzugsweise ist der Verdränger nicht als Balg, sondern als Kolben, insbesondere als Tauchkolben ausgebildet und taucht in einen Speicher ein, welcher vorzugsweise als Zylinder ausgebildet ist. Beim Nachfüllen des Speichers wird der Kolben durch das in den Speicher eindringende Material verdrängt. Nach dem Umschalten des dem Speicher zugeordneten Wegeventils wird der Kolben vorgeschoben und verdrängt das Material aus dem Speicher in den zur Düse führenden "ersten" Förderweg.

Das Speichervolumen ist vorzugsweise so gewählt, dass ein halbvoller Speicher ausreicht, um eine der vier Randfugen einer rechteckigen Isolierglasscheibe, welche häufig vorkommende Abmessungen hat, zu versiegeln, d. h., randnah einen oder zwei Stränge zwischen zwei Glastafeln der Isolierglasscheibe zu spritzen. Die weitaus meisten Isolierglasscheiben haben eine Kantenlänge von weniger als 1,5 m, so dass ein Speicher mit einem Volumen, welches für das Versiegeln einer 2 m bis 3 m langen Randfuge einer Isolierglasscheibe ausreicht, unter Berücksichtigung der Tatsache, dass von den beiden zusammenarbeitenden Speichern mindestens einer wenigstens halb voll ist, mindestens eine 1 m bis 1,5 m lange Randfuge versiegeln kann. Bei den meisten in der Praxis vorkommenden Isolierglasscheiben kann deshalb bei einem so gewählten Speichervolumen jede der vier Randfugen unterbrechungslos versiegelt werden. Vorzugsweise ist das Speichervolumen nicht größer als es für das Versiegeln einer 5 m bis 6 m langen Randfuge benötigt wird, was unter Berücksichtigung der Tatsache, dass einer der beiden Speicher wenigstens halb voll ist, bedeutet, dass stets genügend Material vorhanden ist, um mindestens eine Randfuge zu versiegeln, die 2,5 m bis 3 m lang ist. Wenn bei größeren Isolierglasscheiben die im Speicher vorhandene Menge nicht ausreichen sollte, um eine Randfuge unterbrechungslos zu versiegeln, ist das hinnehmbar, weil solche Isolierglasscheiben seltener vorkommen, so dass der zusätzliche Zeitaufwand für eine kurzzeitige Unterbrechung des Versiegelungsvorganges, der beim Versiegeln einer längeren Randfuge auftreten kann, in der Gesamtbilanz bei der Fertigung einer großen Anzahl von Isolierglasscheiben nicht besonders ins Gewicht fällt.

In einer besonders vorteilhaften Weiterbildung der Erfindung hat die Vorrichtung zum Einspritzen eines Stranges aus einer pastösen Masse in den Zwischenraum zwischen zwei Glastafeln einer Isolierglasscheibe - nachfolgend auch als Versiegelungsvorrichtung bezeichnet - einen dynamischen Mischer für das Mischen der Bestandteile der pastösen Masse. Die pastöse Masse dient dazu, um den Innenraum der Isolierglasscheibe gegen das Eindringen von Wasserdampf zu versiegeln und/oder um einen dauerhaften und hinreichend festen Verbund zwischen den zwei Glastafeln herzustellen. Für einen hinreichend festen Verbund verwendet man eine abbindende Masse, welche aus wenigstens zwei Bestandteilen gebildet ist, die miteinander gemischt werden. Die durch das Mischen entstandene Masse ist zunächst pastös und bindet dann fortschreitend ab, wobei sie sich verfestigt. Abbindende Zweikomponenten-Dicht- und Klebemassen auf der Basis von Thiokol sind für das Versiegeln der Randfuge von Isolierglasscheiben besonders gebräuchlich; sie binden zu Polysulfiden ab.

Seit jeher wird in Vorrichtungen zum Versiegeln von Isolierglasscheiben, deren Glastafeln am Rand miteinander verklebt sind, zum Mischen der Bestandteile der pastösen Masse, welche zwischen die beiden Glastafeln gespritzt wird, ein statischer Mischer verwendet. Davon vollzieht die Weiterbildung der Erfindung durch die Verwendung eines dynamischen Mischers eine völlige Abkehr. Dadurch werden viele bedeutende Vorteile erzielt:
• Der Druckverlust, welchen die pastöse Masse erleidet, wenn sie durch einen dynamischen Mischer hindurchgefördert wird, ist wesentlich kleiner als der Druckverlust, den sie in einem statischen Mischer erleidet. In einer Versiegelungsvorrichtung, welche einen statischen Mischer aufweist, müssen die Bestandteile der pastösen Masse mit einem Druck, welcher bei nicht zu kleinen Abständen zwischen den Glastafeln einer Isolierglasscheibe typisch 200 bar bis 220 bar beträgt, aus den Speichern gepresst werden, aus welchen der statische Mischer gespeist wird. Von dem Druck von 200 bar bis 220 bar fällt der größte Teil auf dem Weg bis zur Düse ab; an der Düse kommt die pastöse Masse mit einem Druck an, der typisch nur noch 70 bar bis 80 bar beträgt, so dass der Druckverlust bis dahin ungefähr 2/3 des anfänglichen Druckes beträgt. Der Löwenanteil des Druckverlustes ist durch den statischen Mischer verursacht. Durch die Verwendung eines dynamischen Mischers kann mindestens ein großer Teil des sonst bei einem statischen Mischer auftretenden Druckverlustes vermieden werden.
• Infolge des stark verringerten Druckverlustes sinkt der Kraftbedarf für das Auspressen der pastösen Masse.
• Verringerter Ausgangsdruck und verringerter Kraftbedarf für das Auspressen der pastösen Masse erlauben es, leichtere Speicher und leichtere Fördereinrichtungen, z. B. hydraulische Kolbenpumpen, zu verwenden.
• Durch die Gewichtseinsparung lassen sich die Speicher, die Fördereinrichtungen und der Mischer leichter gemeinsam mit der Düse bewegen; der Antrieb für die gemeinsame Bewegung kann schwächer ausgelegt sein, was weiteres Gewicht spart.
• Das Bewegen leichterer Speicher und leichterer Fördereinrichtungen erlaubt leichtere Halterungen und Führungen für diese Dinge, was ein weiteres Mal Gewicht spart.
• Mit der Verkleinerung der zu bewegenden Masse der Versiegelungsvorrichtung sinkt deren Neigung zu unerwünschten Schwingungen und wird deren Dämpfung erleichtert.
• Geringere Drücke, geringerer Kraftbedarf und geringere Massen führen zu höherer Lebensdauer, insbesondere bei den Speichern und den hydraulischen Fördereinrichtungen sowie bei deren Dichtungen.
• Das Fassungsvermögen des dynamischen Mischers und die Verweilzeit der pastösen Masse sind, bezogen auf gleiche Mischergebnisse, im dynamischen Mischer wesentlich kleiner als im statischen Mischer. Dadurch sinkt das Volumen der pastösen Masse, welches sich zwischen den Speichern und der Düse befindet. Durch das kleinere Volumen verkleinert sich der Einfluss der Kompressibilität der pastösen Masse auf die Dosiergenauigkeit, so dass letztere sich erhöht.
• Durch die Verringerung der Durchlaufzeit der pastösen Masse durch den Mischer verringert sich das Ausmaß des Abbindens der pastösen Masse, welches auf dem Weg bis zur Düse auftritt.
• Dadurch, dass der dynamische Mischer mit einem geringeren Fassungsvermögen auskommt als ein statischer Mischer und dass die Verweildauer des Materials im dynamischen Mischer kürzer ist als im statischen Mischer, besteht keine so große Gefahr wie bei einem statischen Mischer, dass sich Material in Toträumen des Mischers festsetzt und abbindet. Zu diesem Vorteil trägt das angetriebene Mischwerkzeug bei, welches die pastöse Masse im dynamischen Mischer in Bewegung hält.
• Statische Mischer in Versiegelungsvorrichtungen für Isolierglasscheiben haben typisch eine Länge von 80 cm bis über 1 m. Ein dynamischer Mischer mit entsprechender Leistungsfähigkeit wie ein statischer Mischer ist sehr viel kürzer und kompakter als der statische Mischer. Dadurch kann die Versiegelungsvorrichtung insgesamt kompakter aufgebaut werden, wodurch ein weiteres Mal ihre Neigung zu Schwingungen sinkt.
• Eine erfindungsgemäße Versiegelungsvorrichtung mit dynamischem Mischer lässt sich preiswerter herstellen als eine herkömmliche Versiegelungsvorrichtung mit statischem Mischer.
• Versiegelungsmassen für Isolierglasscheiben sind mehr oder weniger dilatant, d. h., Ihre Viskosität steigt mit zunehmendem Druck, welchem die Masse ausgesetzt ist. Da eine erfindungsgemäße Versiegelungsvorrichtung mit weniger Druck auskommt als bekannte Versiegelungseinrichtungen für Isolierglasscheiben, haben die dilatanten Versiegelungsmassen in einer erfindungsgemäßen Versiegelungsvorrichtung eine niedrigere Viskosität in einer herkömmlichen Versiegelungsvorrichtung. Sie lassen sich mit einer erfindungsgemäßen Vorrichtung deshalb leichter verarbeiten. Das gilt bereits für das am weitesten verbreitete Thiokol. Besonders ausgeprägt ist der Vorteil der Erfindung jedoch beim Verarbeiten von Zweikomponenten-Versiegelungsmassen auf der Basis eines Silikons, welche zu einem Silikonkautschuk abbinden; diese Versiegelungsmassen lassen sich auf einer herkömmlichen Versiegelungsvorrichtung, die mit einem statischen Mischer ausgerüstet ist, allenfalls dann noch verarbeiten, wenn an der Düse nur verhältnismäßig geringere Durchsätze der pastösen Versiegelungsmasse gefordert sind, wie es bei Isolierglasscheiben der Fall ist, in denen der Abstand zwischen den Glastafeln nicht mehr als 10 mm beträgt. Da die Wärmedämmung einer Isolierglasscheibe jedoch umso besser wird, je größer der Abstand der Glastafeln in der Isolierglasscheibe voneinander ist, werden heute weit überwiegend Isolierglasscheiben gefertigt, bei denen der Abstand zwischen den Glastafeln 15 mm bis 25 mm beträgt. Das war, wenn als Versiegelungsmasse ein zu einem Silikonkautschuk abbindendes Silikon verwendet werden sollte, mit herkömmlichen Versiegelungsvorrichtungen nur dann zu schaffen, wenn ein Einbrechen der Versiegelungsgeschwindigkeit in Kauf genommen wurde, d. h., die erforderliche Senkung des Druck in der Versiegelungsvorrichtung zog eine entsprechende Verringerung der Versiegelungsgeschwindigkeit nach sich, die eine Verlängerung der Taktzeit der Isolierglasfertigungslinie nach sich zieht. Mit einer erfindungsgemäßen Versiegelungsvorrichtung ist es jedoch möglich, das Silikon mit so großen Durchsätzen zu verarbeiten, wie es für Isolierglasscheiben mit großem Abstand zwischen den Glastafeln nötig ist, um die kurzen Taktzeiten moderner Isolierglasfertigungslinien voll ausnutzen zu können. Die vorliegende Erfindung eignet sich deshalb nicht nur zur Verwendung von Thiokol als Versiegelungsmasse, sondern auch zur Verwendung von Polyurethan und ganz besonders von zu Silikonkautschuk abbindendem Silikon als Zweikomponenten-Versiegelungsmasse.

Vorzugsweise hat der dynamische Mischer ein zylindrisches oder kegelstumpfförmiges Mischrohr, in welchem als Mischwerkzeug eine antreibbare Mischerwelle angeordnet ist, welche mit von der Mischerwelle abstehenden Mischelementen versehen ist. Die Mischelemente stehen vorzugsweise radial von der Mischerwelle ab und reichen bis dicht an die innen liegende Umfangswand des Mischrohres heran, so dass der gesamte lichte Querschnitt des Mischrohres von den Mischelementen erreicht wird und sich die zu vermischenden Materialien im Mischerrohr nicht festsetzen und abbinden können.

Die Mischelemente können unregelmäßig um die Mischerwelle herum angeordnet sein, sie können auch in mehreren kreisförmigen Anordnungen hintereinander auf der Mischerwelle angeordnet sein. Besonders bevorzugt ist es, wenn die Mischelemente wendelförmig um die Mischerwelle herum angeordnet sind, denn damit lässt sich am besten sicherstellen, dass alle Bereiche der innen liegenden Oberfläche des Mischrohrs von den Mischelementen überstrichen werden.

Die Mischelemente können unterschiedliche Gestalt haben: Es kann sich um Stäbe handeln, die im Querschnitt rund oder eckig ausgebildet sind. Es kann sich um Flügel oder um Bügel handeln. Vorteilhaft sind auch schaufelartig ausgebildete Mischelemente. Besonders sie können so ausgebildet sein, dass sie in Förderrichtung weisende Flächen haben, welche unter einem von 90" verschiedenen Winkel zur Längsachse der Mischerwelle angeordnet sind, so dass sie bei angetriebener Mischerwelle einen Vortrieb der pastösen Masse bewirken. Auf diese Weise kann der Druckverlust, den das Material im dynamischen Mischer erleidet, stark reduziert oder zum Verschwinden gebracht werden. Es ist sogar möglich, einen auf dem Weg vom Speicher zum dynamischen Mischer erlittenen Druckverlust wieder auszugleichen.

Besonders bevorzugt ist es, Mischelemente, die einen Vortrieb erzeugen können, mit anderen Mischelementen, die keinen Vortrieb erzeugen, aber eine größere Mischwirkung haben, zu kombinieren.

Als dynamischer Mischer kommt auch ein Mischrohr infrage, in welchem eine oder zwei Schnecken antreibbar angeordnet sind.

Zweckmäßigerweise sind der Strömungsquerschnitt des Mischers und seine Antriebsleistung für einen Durchsatz der pastösen Masse von mindestens 0,5 Liter pro Minute ausgelegt, besser für einen Durchsatz der pastösen Masse von mindestens 2 Litern pro Minute, besonders bevorzugt für einen Durchsatz von mindestens 3 Litern pro Minute. Letzteres macht die Vorrichtung besonders geeignet für das rasche Versiegeln von Isolierglasscheiben mit großem Abstand zwischen den Glasplatten.

Die Erfindung ermöglicht derart kompakte Versiegelungsvorrichtungen, dass einer Düse Speicher nicht nur für die Bestandteile einer einzigen Versiegelungsmasse wie z. B. Thiokol auf einem gemeinsamen bewegten Träger zugeordnet werden können, sondern eine größere Anzahl von Speichern für die Bestandteile von unterschiedlichen Versiegelungsmassen, z. B. für Thiokol und Polyurethan oder für Thikol und Silikon oder für alle drei Versiegelungsmassen. Die Versiegelungsvorrichtung erreicht selbst in einem solchen Fall noch nicht das Gewicht einer herkömmlichen Versiegelungsvorrichtung für nur eine Versiegelungsmasse. Durch ein oder mehrere Ventile, insbesondere durch ein Wegeventil, lässt sich eine solche Versiegelungsvorrichtung bequem, zeitsparend und kostensparend von der Verarbeitung einer Versiegelungsmasse auf die Verarbeitung einer anderen Versiegelungsmasse umschalten, wenn nötig unter Wechsel auf einen anderen dynamischen Mischer und auf eine andere Düse.

Weitere Merkmale und Vorteile der Erfindung ergeben sich aus der beigefügten Beschreibung von Ausführungsbeispielen der Erfindung, welche in den beigefügten Zeichnungen dargestellt sind. In den Ausführungsbeispielen sind gleiche oder einander entsprechende Teile mit übereinstimmenden Bezugszahlen bezeichnet.
- Figur 1: zeigt eine schematische Darstellung einer Vorrichtung zum Einspritzen einer pastösen Masse in den Zwischenraum zwischen zwei Glastafeln einer Isolier- glasscheibe,
- Figur 2: zeigt in einer ebenso schematischen Darstellung wie in Figur 1 ein zweites Aus- führungsbeispiel einer Vorrichtung zum Einspritzen einer pastösen Masse in den Zwischenraum zwischen zwei Glastafeln einer Isolierglasscheibe,
- Figur 3: zeigt eine Vorrichtung wie in Figur 1, jedoch mit einem dynamischen Mischer anstelle eines statischen Mischers,
- Figur 4: zeigt eine Vorrichtung wie in Figur 2, jedoch mit einem dynamischen Mischer anstelle eines statischen Mischers, und
- Figur 5: zeigt einen Längsschnitt durch einen dynamischen Mischer.

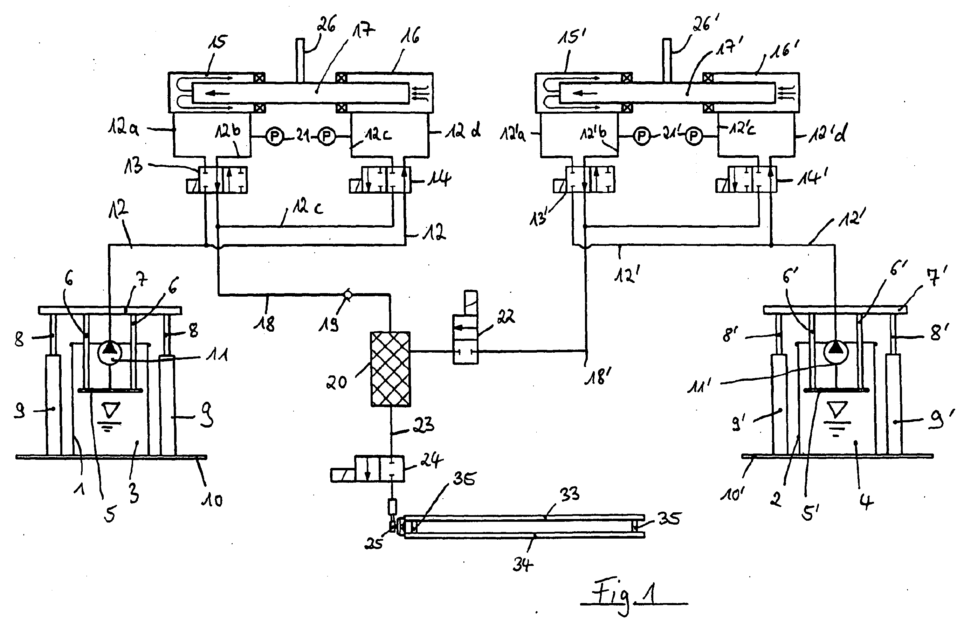

Figur 1 zeigt ein Gebinde 1 für einen ersten Bestandteil 3 einer pastösen Masse und ein Gebinde 2 für einen zweiten Bestandteil 4 der pastösen Masse. Die beiden Gebinde sind z. B. Fässer, deren Deckel abgenommen sind. Auf dem, ersten Bestandteil 3 im Gebinde 1 liegt eine Folgeplatte 5. Von der Folgeplatte 5 führen zwei Stangen 6 senkrecht nach oben zu einer Traverse 7, welche nicht nur die beiden Stangen 6, sondern auch zwei Kolbenstangen 8 verbindet, welche zu zwei hydraulischen Zylindern 9 gehören, die auf einer Bodenplatte 10 verankert sind, auf welcher das Gebinde 1 steht. Durch Einziehen der Kolbenstangen 8 in die hydraulischen Zylinder 9 drückt die Traverse 7 die Folgeplatte 5 auf den im Gebinde 1 befindlichen Vorrat des Bestandteils 3 der pastösen Masse. Dadurch wird der Bestandteil 3 durch eine Öffnung in der Folgeplatte 5 in eine oberhalb der Folgeplatte 5 befindliche Pumpe 11 gedrückt, die den Bestandteil 3 in eine Leitung 12 fördert.

Die Leitung 12 verzweigt sich zu zwei Wegeventilen 13 und 14. Es handelt sich dabei um 4/2-Wegeventile. Das Wegeventil 13 ist über zwei Leitungen 12a und 12b mit zwei Zugängen mit dem Speicherraum eines ersten Zylinders 15 verbunden. Das andere Wegeventil 14 ist durch zwei Leitungen 12c und 12d mit zwei Zugängen zu einem Speicherraum eines zweiten Zylinders 16 verbunden. Das Vorsehen von zwei Zugängen zu den Zylindern 15 und 16 begünstigt einen vollständigen Materialwechsel in den Zylinder durch den Wechsel von Nachfüllen und Abgeben. Die beiden Zylinder 15 und 16 sind gleich groß und liegen in einer gemeinsamen Flucht. Ein Tauchkolben (Plunger) 17 taucht in beide Zylinder 15 und 16 zugleich ein.

Die Leitung 12a dient zum Nachfüllen des Zylinders 15 und ist in der gezeichneten Stellung des Wegeventils 13 abgesperrt. Die Leitung 12b nimmt den aus dem Zylinder 15 gepressten Bestandteil 3 auf und führt ihn in der gezeichneten Stellung des Wegeventils 113 durch dieses hindurch in eine Leitung 18, in welcher ein Rückschlagventil 19 liegt. Die Leitung 18 mündet in einen statischen Mischer 20.

Die Leitung 12d dient zum Nachfüllen des zweiten Zylinders 16 und ist in der gezeichneten Stellung des Wegeventils 14 mit der Leitung 12 verbunden, so dass der Zylinder 16 nachgefüllt werden kann. Die Leitung 12c ist über das zweite Wegeventil 14 mit der Leitung 18 verbunden, welche in den statischen Mischer 20 mündet. Die Leitung 12c ist in der gezeichneten Stellung des Wegeventils 14 unterbrochen.

Die beiden Leitungen 12b und 12c sind jeweils durch ein Überdruckventil 21 abgesichert.

In der gezeichneten Stellung der Wegeventile 13 und 14 wird der Zylinder 16 nachgefüllt, wodurch der Tauchkolben 17 vom Zylinder 16 zum Zylinder 15 geschoben wird, tiefer in den Zylinder 15 eintaucht und den darin befindlichen Bestandteil 3 in die Leitung 12b presst. Nach vorzugsweise gleichzeitigem Umschalten der Wegeventile 13 und 14 kehrt sich die Arbeitsweise um: Über die Leitung 12a wird der Zylinder 15 nachgefüllt. Der Plunger 17 wird zum gegenüberliegenden Zylinder 16 verschoben, taucht tiefer in diesen ein und verdrängt einiges vom Bestandteil 3 der pastösen Masse, in die Leitung 12d und weiter in die Leitung 18 hinein zum Mischer 20.

In einer abgewandelten Ausführungsform ist der Tauchkolben 17 mit einem gesonderten steuerbaren Antrieb versehen, z. B. mit einem Spindelantrieb, welcher an einem Arm 26 angreift, welcher am Tauchkolben 17 angebracht ist. Entsprechendes gilt für den mit einem Arm 26' versehenen Tauchkolben 17' der beiden Zylinder 15' und 16'.

Der zweite Bestandteil 4 der pastösen Masse befindet sich in dem zweiten Gebinde 2 und wird aus diesem auf gleiche Weise herausgefördert, wie der erste Bestandteil 3 aus dem ersten Gebinde 1. Die dafür benutzten Einrichtungen sind deshalb mit denselben, mit einem Strich versehenen Bezugszahlen bezeichnet.

Der zweite Bestandteil 4 wird in entsprechender Weise in zwei Zylinder 15' und 16' gefördert und gelangt von diesen in eine Leitung 18', welche wie die Leitung 18 in den Mischer 20 mündet. In der Leitung 18' liegt ein 2/2-Wegeventil 22, welches zwei Stellungen hat: In der gezeichneten Stellung unterbricht es die Leitung 18', in der anderen Stellung ist die Leitung 18' durchgängig.

Vom statischen Mischer 20 führt eine Leitung 23, in welcher ein 2/2-Wegeventil 24 liegt, zu einer Düse 25. Das Wegeventil 24 hat zwei Stellungen. In der gezeichneten Stellung unterbricht es die Leitung 23, in der anderen Stellung macht es die Leitung 23 durchgängig. Das Wegeventil 24 ermöglicht eine Unterbrechung der Zufuhr der pastösen Masse, welche aus den beiden Bestandteile 3 und 4 gemischt worden ist, in unmittelbarer Nachbarschaft der Düse 25. Das ist günstig für ein Verhindern des Nachlaufens der Masse, wenn der Einspritzvorgang unterbrochen wird.

Bei den Wegeventilen 13, 14, 13', 14', 22 und 24 handelt es sich vorzugsweise um Magnetventile.

Die Zylinder 15, 16, 15' und 16' sind vorzugsweise gleich groß. Das Mengenverhältnis, in welchem sie die Bestandteile 3 und 4 zum Mischer 20 fördern, kann dadurch bestimmt werden, dass die Querschnitte der Plunger 17 und 17' unterschiedlich gewählt werden, bei einem beabsichtigten Mischungsverhältnis von neun zu eins dementsprechend mit einem Querschnittsverhältnis von neun zu eins unter der Voraussetzung, dass sich die beiden Plunger 17 und 17' gleich schnell bewegen, was durch eine mechanische Zwangssynchronisierung erreichbar ist.

Die Leitungen 12b und 18, der Mischer 20, die Leitung 23 und das Wegeventil 24 stellen einen "ersten" Förderweg bezüglich des Zylinders 15 dar. Die Leitungen 12c und 18, der Mischer 20, die Leitung 23 und das Wegeventil 24 stellen einen "ersten" Förderweg bezüglich des Zylinders 16 dar. Die Leitungen 12b', 18', der Mischer 20 und die Leitung 23 Stellen einen "ersten" Förderweg bezüglich des Zylinders 15' dar. Die Leitungen 12c' und 18', der Mischer 20 und die Leitung 23 stellen einen "ersten" Förderweg bezüglich des Zylinders 16' dar. Die Leitungen 12 und 12a stellen einen "zweiten" Förderweg bezüglich des Zylinders 15 dar. Die Leitungen 12 und 12d stellen einen "zweiten" Förderweg bezüglich des Zylinders 16 dar. Die Leitungen 12' und 12'a stellen einen "zweiten" Förderweg bezüglich des Zylinders 15' dar und die Leitungen 12' und 12'd stellen einen "zweiten" Förderweg bezüglich des Zylinders 16' dar.

Die Zylinder 15, 16, 15', 16', alle Wegeventile 13, 14, 13', 14', 22 und 24, der Mischer 20 und die Düse 25 sind bevorzugt auf einem gemeinsamen beweglichen Träger montiert und werden zusammen mit der Düse 25 bewegt, wenn diese am Rand einer Isolierglasscheibe entlang bewegt wird.

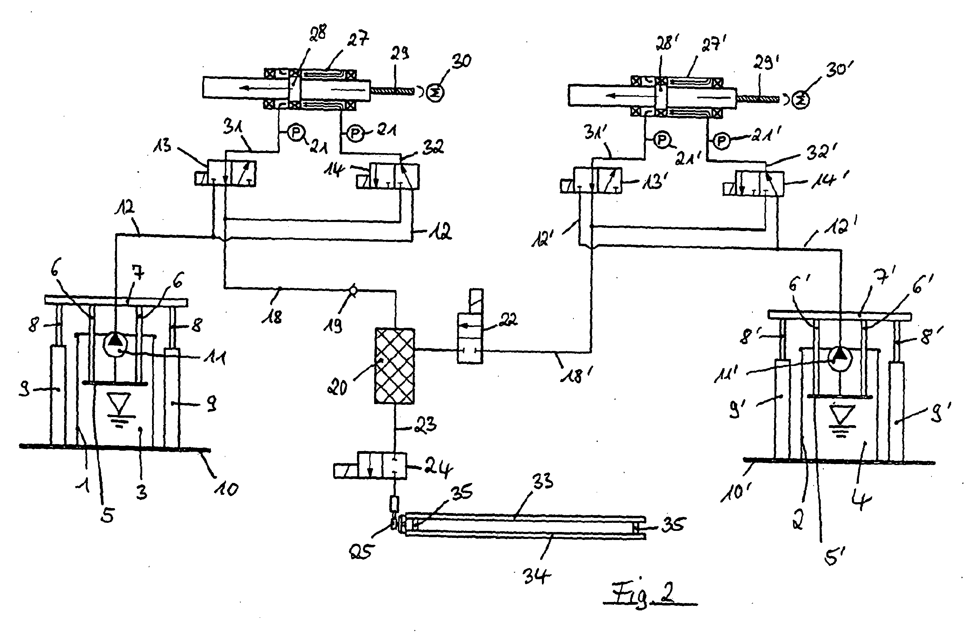

Das in Figur 2 dargestellte Ausführungsbeispiel unterscheidet sich von dem in Figur 1 dargestellten Ausführungsbeispiel darin, dass anstelle der Zylinderpaare 15 und 16 sowie 15' und 16' jeweils nur ein Zylinder 27, 27' mit einem beidseitig von dem Bestandteil 3 bzw. von dem Bestandteil 4 beaufschlagten Kolben 28 bzw. 28' vorgesehen ist, welcher kein Tauchkolben ist. Aus einem Ende des Zylinders 27 bzw. 27' führt eine Kolbenstange heraus, welche sich in eine Spindel 29, 29' fortsetzt, welche jeweils durch einen Elektromotor 30, 30' antreibbar ist, bei dem es sich bevorzugt um einen Servomotor handelt.

Der Zylinder 27, 27' hat zu beiden Seiten des Kolbens 28, 28' je einen Zugang, in welchen eine Leitung 31, 32 bzw. 31', 32' mündet, die von einem 3/2-Wegeventil 13, 14 bzw. 13', 14' kommt.

In den gezeichneten Stellungen der Wegeventile 13, 14, 13', 14' wird die rechte Speicherkammer der Zylinder 27, 27' nachgefüllt und die linke Speicherkammer gibt Material ab, welches über den Mischer 20 zur Düse 25 gelangt, durch welche die gemischte pastöse Masse in die Randfuge einer Isolierglasscheibe gespritzt werden kann, welche zwei Glastafeln 33 und 34 aufweist, zwischen denen ein rahmenförmiger Abstandhalter 35 angeordnet ist. Durch Umschalten der vier Wegeventile 13, 14, 13', 14' werden die Funktionen der Speicherkammern in den Zylinder 27, 27' vertauscht.

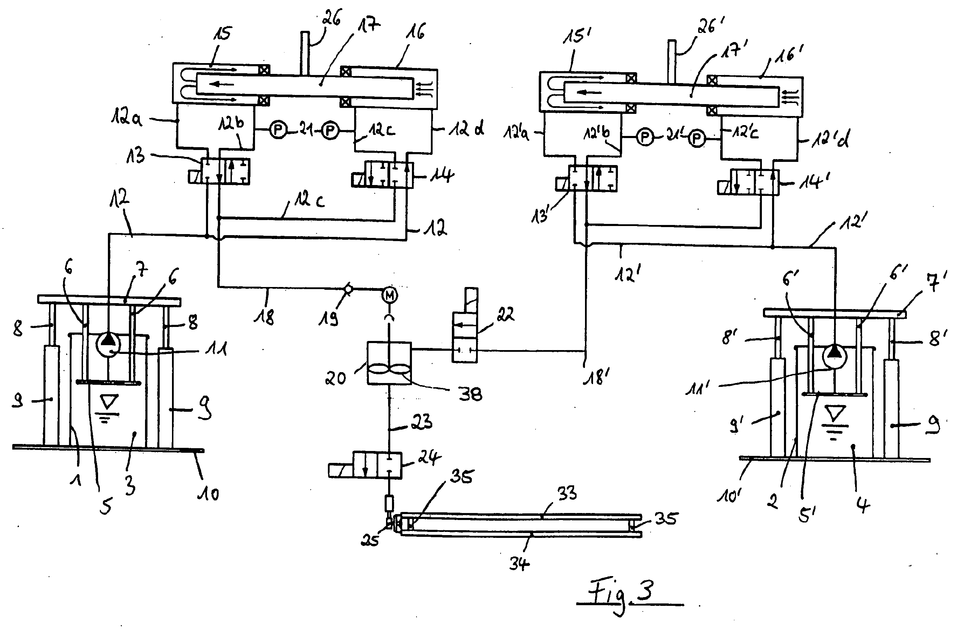

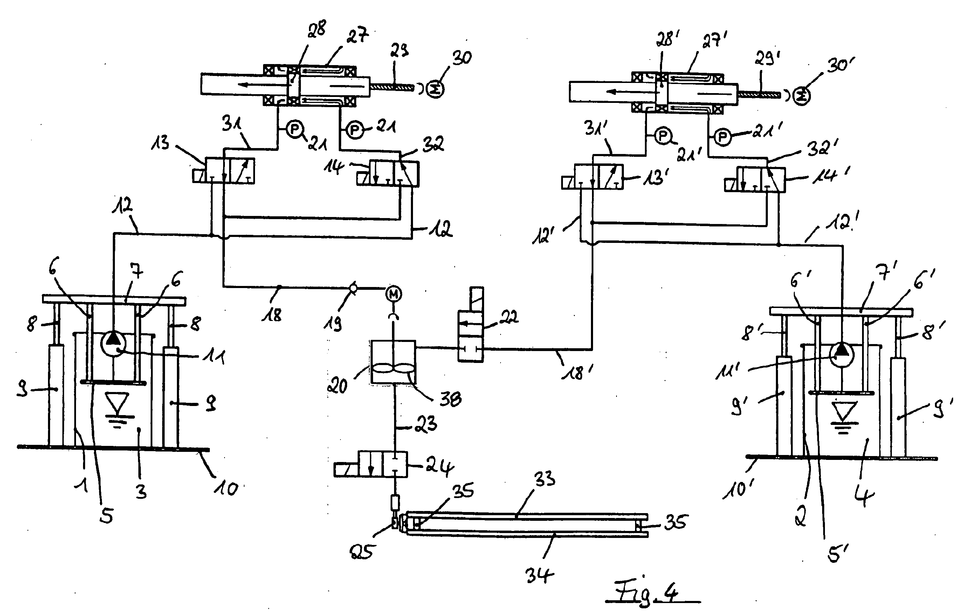

Die in Figur 3 und Figur 4 dargestellten Ausführungsbeispiele unterscheiden sich von den in Figur 1 bzw. Figur 2 dargestellten Beispielen darin, dass anstelle des statischen Mischers ein dynamischer Mischer 20 vorgesehen ist, welcher als Mischelemente 38 z. B. zwei Bügel hat, die von einer Mischerwelle 37 abstehen; die von einem Motor 46 angetrieben ist.

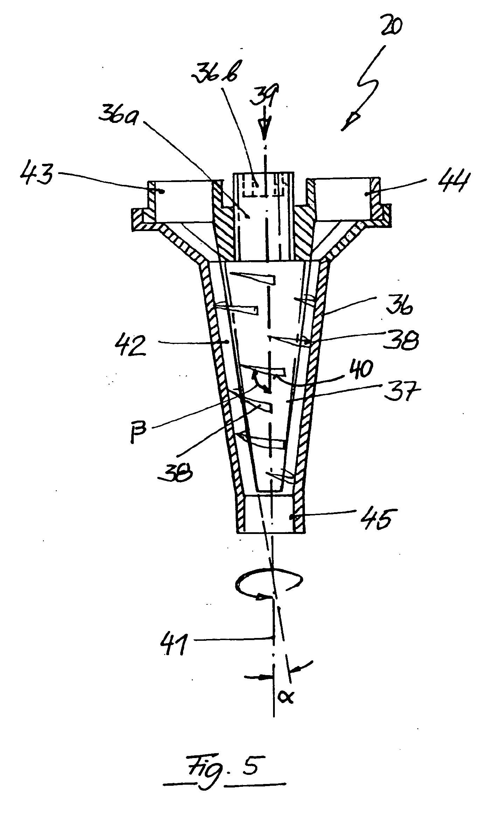

Figur 5 zeigt ein Beispiel eines dynamischen Mischers 20, welcher ein konisches Mischrohr 36 hat, in welchem eine konische Mischerwelle 37 gelagert ist, welche in einem aus dem Mischrohr 36 vorstehenden Wellenzapfen 36a ein Sackloch 36b mit Sechskantquerschnitt hat, in welches formschlüssig eine treibende Welle eines Motors 46 (siehe Figuren 3 und 4) eingreifen kann.

Die Mischerwelle 37 hat den gleichen Konuswinkel α wie das Mischrohr 36, sodass zwischen beiden ein Ringspalt 42 von gleich bleibender Breite besteht.

Die Mischerwelle 37 trägt als Mischelemente 38 radial abstehende Flügel, die bis unmittelbar an die innere Oberfläche des Mischrohrs 36 reichen. Die Mischelemente 38 haben eine in Förderrichtung 39 weisende Fläche 40, welche um einen von 90° verschiedenen Winkel β zur Längsachse 41 so angestellt sind, dass die sich mit der Mischerwelle 37 drehenden Mischelemente 38 einen Vortrieb der im Mischer 20 befindlichen Masse bewirken.

Zwei zu vermischende Bestandteile einer abbindenden Versiegelungsmasse werden durch zwei Einlassstutzen 43 und 44 zugeführt. Die Mischung verlässt den Mischer 20 durch einen Auslass 45.

### Bezugszahlenliste:

- 1.: Gebinde
- 2.: Gebinde
- 3.: Bestandteil
- 4.: Bestandteil
- 5, 5': Folgeplatte
- 6, 6': Stange
- 7, 7': Traverse
- 8, 8': Kolbenstange
- 9, 9': Zylinder
- 10, 10': Bodenplatte
- 11, 11': Pumpe
- 12, 12': Leitung
- 12a, 12'a: Leitung
- 12b, 12'b: Leitung
- 12c, 12'c: Leitung
- 12d, 12'd: Leitung
- 13, 13': Wegeventil
- 14, 14': Wegeventil
- 15, 15': Zylinder
- 16, 16': Zylinder
- 17, 17': Tauchkolben (Plunger)
- 18, 18': Leitung
- 19.: Rückschlagventil
- 20.: Mischer
- 21, 21': Überdruckventil
- 22.: Wegeventil
- 23.: Leitung
- 24.: Wegeventil
- 25.: Düse
- 26, 26': Arm
- 27, 27': Zylinder
- 28, 28': Kolben
- 29, 29': Spindel
- 30, 30': Elektromotor
- 31, 31': Leitung
- 32, 32': Leitung
- 33.: Glastafel
- 34.: Glastafel
- 35.: Abstandhalter
- 36.: Mischrohr
- 36a.: Wellenzapfen
- 36b.: Sackloch
- 37.: Mischerwelle
- 38.: Mischelemente
- 39.: Förderrichtung
- 40.: Fläche von 38
- 41.: Längsachse
- 42.: Ringspalt
- 43.: Einlassstutzen
- 44.: Einlassstutzen
- 45.: Auslass
- 46.: Motor
- α.: Winkel
- β.: Winkel

## Patentansprüche

1. Verfahren zum Einspritzen eines Stranges aus einer pastösen Masse, in den Zwischenraum zwischen zwei Glastafeln (33, 34) einer Isolierglasscheibe, indem eine Düse (25) mit wenigstens einer Mündung, welche in den Zwischenraum zwischen den Glastafeln (33, 34) gerichtet ist, am Rand wenigstens einer der beiden Glastafeln (33, 34) entlang bewegt und während dieser Bewegung die pastöse Masse der Düse (25) zugeführt wird, indem diese Masse oder ein Bestandteil dieser Masse jeweils aus wenigstens einem nachfüllbaren Speicher (15, 15', 16, 16', 27, 27') gepresst wird, welcher mit der Düse (25) durch einen ersten Förderweg verbunden ist, **dadurch gekennzeichnet, dass** für die Masse bzw. für Bestandteile der Masse jeweils zwei mit der Düse (25) verbundene Anordnungen aus einem Speicher (15, 15', 16, 16', 27, 27') und einem darin eingreifenden Verdränger (17, 17' 28, 28') gegensinnig betrieben werden, und dass nach einer Pause des Auspressens die Masse bzw. ihr jeweiliger Bestandteil aus demjenigen Speicher (15, 15', 16, 16', 27, 27') eines Paares von Anordnungen, welche aus einem Speicher (15, 15', 16, 16', 27, 27') und aus einem Verdränger (17, 17', 28, 28') bestehen, gepresst wird, welcher die größere Menge der Masse bzw. eines ihrer Bestandteile enthält.

2. Verfahren nach Anspruch 1, **dadurch gekennzeichnet, dass** die paarweise gegensinnig betriebenen Anordnungen aus einem Speicher (15, 15', 16, 16', 27, 27') und einem Verdränger (17, 17', 28, 28') synchron betrieben werden.

3. Verfahren nach einem der vorstehenden Ansprüche, **dadurch gekennzeichnet, dass** die zwischen zwei Pausen der Bewegung der Düse (25) jeweils benötigte Menge der Masse bzw. ihrer Bestandteile vorab ermittelt und nach Möglichkeit aus demjenigen Speicher (15, 15', 16, 16', 27, 27') eines Paares von Anordnungen, welche aus einem Speicher (15, 15', 16, 16', 27, 27') und einem Verdränger (17, 17', 28, 28') bestehen, gepresst wird, aus welchem dieses unterbrcchungslos möglich ist, insbesondere aus jenem Speicher (15, 15', 16, 16', 27, 27'), welcher den kleineren Vorrat der Masse bzw. eines ihrer Bestandteile enthält.

4. Verfahren nach einem der vorstehenden Ansprüche, **dadurch gekennzeichnet, dass** dann, wenn die Masse bzw. ein Bestandteil der Masse aus einem von zwei Speichern (15, 15', 16, 16', 27, 27') eines Paares gepresst wird, der andere Speicher (15, 15', 16, 16', 27, 27') des Paares durch eine Pumpe (11, 11') aus einem Gebinde (1, 2) nachgefüllt wird, und dass das Auspressen und Nachfüllen synchron durchgeführt werden.

5. Verwendung einer Vorrichtung mit einer Düse (25),mit wenigstens einem nachfüllbaren Speicher (15, 15', 16, 16', 27, 27'), welcher mit der Düse (25) durch einen ersten Förderweg verbunden ist und durch einen zweiten Förderweg an ein Gebinde (1, 2) anschließbar ist, aus welchem der Speicher (15, 15', 16, 16', 27, 27') nachfüllbar ist, und mit einem in den Speicher (15, 15', 16, 16', 27, 27') eingreifenden Verdränger (17, 17', 28, 28'), durch dessen Betätigung die Masse bzw. ihr Bestandteil aus dem Speicher (15, 15', 16, 16', 27, 27') in den ersten Förderweg hinein verdrängt wird, wobei für die Masse bzw. für wenigstens einen Bestandteil der Masse jeweils zwei mit der Düse (25) verbundene Anordnungen aus einem Speicher (15, 15', 16, 16', 27, 27') und einem Verdränger (17, 17', 28, 28') vorgesehen und gegensinnig antreibbar sind,
zum Einspritzen eines Stranges aus einer pastösen Masse, in den Zwischenraum zwischen zwei Glastafeln (33, 34) einer Isolierglasscheibe,
wobei eine Steuereinrichtung vorgesehen ist, welche die Anordnungen aus einem Speicher (15, 15', 16, 16', 27, 27') und einem Verdränger (17, 17', 28, 28') in der Weise steuert, dass nach einer Pause des Auspressens die Masse bzw. ihrer Bestandteile aus demjenigen Speicher (15, 15', 16, 16', 27, 27') eines Paares von Anordnungen, welche aus einem Speicher (15, 15', 16, 16', 27, 27') und aus einem Verdränger (17, 17', 28, 28') bestehen, gepresst wird, welcher die größere Menge der Masse bzw. eines ihrer Bestandteile enthält.

6. Verwendung einer Vorrichtung nach Anspruch 5, in welcher zwischen der Düse (25) und den Speichern (15, 15', 16, 16', 27, 27') ein dynamischer Mischer (20) vorgesehen ist.

7. Verwendung einer Vorrichtung nach Anspruch 6, in welcher der dynamische Mischer (20) ein zylindrisches oder kegelstumpfförmiges Mischrohr (36) hat, in welchem eine antreibbare Mischerwelle (37) angeordnet ist, welche mit von der Mischerwelle (37) abstehenden Mischelementen (38) versehen ist.

8. Verwendung einer Vorrichtung nach einem der Ansprüche 6 oder 7, in welcher der Strömungsquerschnitt des Mischers (20) und seine Antriebsleistung für einen Durchsatz der pastösen Masse von mindestens 2 1/min, vorzugsweise von mindestens 3 l/min ausgelegt sind.

9. Verwendung einer Vorrichtung nach einem Ansprüche 5 bis 8, in welcher eine Steuereinrichtung vorgesehen ist, welche die Anordnungen, welche aus einem Speicher (15, 15', 16, 16', 27, 27') und einem Verdränger (17, 17', 28, 28') bestehen, in der Weise steuert, dass die zwischen zwei Pausen der Bewegung der Düse (25) jeweils benötigte Menge der Masse bzw. ihrer Bestandteile vorab ermittelt und nach Möglichkeit aus demjenigen Speicher (15, 15', 16, 16', 27, 27') eines Paares von Anordnungen welche aus einem Speicher (15, 15', 16, 16', 27, 27') und einem Verdränger (17, 17', 28, 28') bestehen, gepresst wird, aus welchem dieses unterbrechungslos möglich ist, insbesondere aus demjenigen Speicher (15, 15', 16, 16', 27, 27'), welcher den kleineren Vorrat der Masse bzw. ihres jeweiligen Bestandteiles enthält.

10. Verwendung einer Vorrichtung nach einem Ansprüche 5 bis 9, in welcher eine Steuereinrichtung vorgesehen ist, welche die Anordnungen, die aus einem Speicher (15, 15', 16, 16', 27, 27') und einem Verdränger (17, 17', 28, 28') bestehen, in der Weise steuert, dass dann, wenn die Masse bzw. ein Bestandteil der Masse aus einem von zwei Speichern (15, 15', 16, 16', 27, 27') eines Paares gepresst wird, der andere Speicher (15, 15', 16, 16', 27, 27') des Paares über einen zweiten Förderweg durch eine Pumpe (11, 11') aus einem Gebinde (1, 2) nachgefüllt wird, wobei das Auspressen und das Nachfüllen synchron durchgeführt werden.

11. Verwendung einer Vorrichtung nach einem der Ansprüche 5 bis 10, in welcher die Düse (25) und die mit ihr in Verbindung stehenden Anordnungen, welche aus einem Speicher (15, 15', 16, 16', 27, 27') und einem Verdränger (17, 17', 28, 28') bestehen, sowie ein gegebenenfalls mit der Düse (25) in Verbindung stehender Mischer (20) auf einem beweglichen gemeinsamen Träger angebracht sind.

12. Verwendung einer Vorrichtung nach einem der Ansprüche 5 bis 11, in welcher die Speicher (15, 15', 16, 16', 27, 27') ein Speichervolumen haben, welches ausreicht, um für einen herzustellenden Typ von Isolierglasscheiben 2m bis 3m lange und höchstens 5m bis 6m lange Stränge aus der Masse unterbrechungslos in den Zwischenraum zwischen zwei Glastafeln (33, 34) der Isolierglasscheibe zu spritzen.

13. Verwendung einer Vorrichtung nach einem der Ansprüche 5 bis 12, in welcher die Paare aus Anordnungen aus einem Speicher (15, 15', 16, 16', 27, 27') und einem Verdränger (17, 17', 28, 28') als eine Baueinheit ausgebildet sind, in welcher die beiden Speicher eines Paares durch einen einheitlichen Zylinder (27, 27') gebildet sind, in welchem ein den Zylinder (27, 27') in zwei Speichervolumina unterteilender Kolben (28, 28') angeordnet ist, welcher durch die beim Nachfüllen aus einem Gebinde (1, 2) geförderte Masse bzw. deren Bestandteil oder durch einen gesonderten Antrieb, insbesondere durch einen Servomotor (30, 30') verschiebbar ist.

14. Verwendung einer Vorrichtung nach einem der Ansprüche 5 bis 12, in welcher die beiden Speicher eines Paares in einer gemeinsamen Flucht angeordnete Zylinder (15, 15', 16, 16') sind, deren Kolben (17, 17') eine Baueinheit bilden.

15. Verwendung einer Vorrichtung nach einem der Ansprüche 5 bis 14, in welcher für unterschiedliche Bestandteile der Masse gleiche Speicher, insbesondere Zylinder (15, 15', 16, 16', 27, 27'), vorgesehen sind.

16. Verwendung der Vorrichtung nach einem der Ansprüche 5 bis 15 für das Verarbeiten von Silikon.

## Claims

1. Method for injecting a strand of a pasty material into the intermediate space between two glass panels (33, 34) of an insulating glass pane, by moving a nozzle (25), having at least one orifice directed into the intermediate space between the glass panels (33, 34), along the edge of at least one of the two glass panels (33, 34), and by supplying the pasty material to the nozzle (25) during such movement by pressing the compound, or a constituent of that compound, out from at least one refillable reservoir (15, 15', 16, 16', 27, 27') which is connected with the nozzle (25) via a first conveying path, **characterized in that** two arrangements, connected with the nozzle (25) and each comprising a reservoir (15, 15', 16, 16', 27, 27') and a displacer (17, 17', 28, 28') engaging in the latter, are provided for the compound, or for each of the respective constituents of the compound, and are operated in opposite directions, and that following a stop in the pressing-out operation the compound or its respective constituent is pressed out from that reservoir (15, 15', 16, 16', 27, 27') of one pair of arrangements, consisting of a reservoir (15, 15', 16, 16', 27, 27') and a displacer (17, 17', 28, 28'), which contains the greater quantity of the compound or one or its constituents.

2. The method as defined in Claim 1, **characterized in that** the arrangements, being operated in pairs and in opposite directions and consisting each of a reservoir (15, 15', 16, 16', 27, 27') and a displacer (17, 17', 28, 28'), are operated in synchronism.

3. The method as defined in any of the preceding claims, **characterized in that** the quantity of the pasty material, or its constituents, required at any time between two stops in the movement of the nozzle, is determined in advance and is pressed out if possible from that reservoir (15, 15', 16, 16', 27, 27') of one pair of arrangements, comprising a reservoir (15, 15', 16, 16', 27, 27') and a displacer (17, 17', 28, 28'), from which such delivery will be possible without any interruption.

4. The method as defined in any of the preceding claims, **characterized in that** when the compound, or one of its constituents, is pressed out from one of wo reservoirs (15, 15', 16, 16', 27, 27') of one pair, the other reservoir (15, 15', 16, 16', 27, 27') of that pair is refilled from a container (1, 2) by a pump (11, 11').

5. The use of a device for injecting a strand of a pasty material into the intermediate space between two glass panels (33, 34) of an insulating glass pane, having a nozzle (25), having at least one refillable reservoir (15, 15', 16, 16', 27, 27'), which is connected with the nozzle (25) via a first conveying path and which can be connected with a container (1, 2), from which the reservoir (15, 15', 16, 16', 27, 27') can be refilled, via a second conveying path, and having a displacer (17, 17', 28, 28') which engages in the reservoir (15, 15', 16, 16', 27, 27') and which when operated displaces the compound, or its constituent, from the reservoir (15, 15', 16, 16', 27, 27') into the first conveying path, in which two arrangements, each connected with the nozzle (25) and each comprising a reservoir (15, 15', 16, 16', 27, 27') and a displacer (17, 17', 28, 28') engaging in the latter, are provided for the compound or for at least one constituent of the compound, and can be operated in opposite directions, and wherein there is provided a control means for controlling the arrangements, each consisting of a reservoir (15, 15', 16, 16', 27, 27') and a displacer (17, 17', 28, 28'), in such a way that following a stop in the pressing-out operation the compound or its respective constituent is pressed out from that reservoir (15, 15', 16, 16', 27, 27') of one pair of arrangements, consisting of a reservoir (15, 15', 16, 16', 27, 27') and a displacer (17, 17', 28, 28'), which contains the greater quantity of the compound or of one of its constituents.

6. The use of a device as defined in Claim 5, in which the mixer (20) is a dynamic mixer.

7. The use of a device as defined in Claim 6, in which the dynamic mixer (20) has a cylindrical or frustum-shaped mixing tube (36) in which a driven mixer shaft (37) is arranged which is provided with mixing elements (38) projecting from the mixer shaft (37).

8. The use of a device as defined in any of Claims 6 or 7, in which the flow area of the mixer (20) and its drive power are designed for a throughput of the pasty material of at least 2 l/min, preferably at least 3 l/min.

9. The use of a device as defined in any of Claims 5 to 8, in which there is provided a control means for controlling the arrangements, each consisting of a reservoir (15, 15', 16, 16', 27, 27') and a displacer (17, 17', 28, 28'), in such a way that the quantity of the compound, or its constituents, required at any time between two stops in the movement of the nozzle (25), is determined in advance and is pressed out, if possible, from that reservoir (15, 15', 16, 16', 27, 27') of one pair of arrangements, comprising a reservoir (15, 15', 16, 16', 27, 27') and a displacer (17, 17', 28, 28'), from which such delivery will be possible without any interruption, particularly from that reservoir (15, 15', 16, 16', 27, 27') that contains the smaller supply of the compound, or one of its constituents, respectively.

10. The use of a device as defined in any of Claims 5 to 9, in which there is provided a control means for controlling the arrangements, each consisting of a reservoir (15, 15', 16, 16', 27, 27') and a displacer (17, 17', 28, 28'), in such a way that when the compound, or its constituents, are pressed out from one of two reservoirs (15, 15', 16, 16', 27, 27') of one pair, the other reservoir (15, 15', 16, 16', 27, 27') of that pair is refilled from a container (1, 2) by a pump (11, 11') via a second conveying path, wherein the pressing-out and refilling operations are performed in synchronism.

11. The use of a device as defined in any of Claims 5 to 10, in which the nozzle (25) and the arrangements connected with it, each comprising a reservoir (15, 15', 16, 16', 27, 27') and a displacer (17, 17', 28, 28'), and a mixer that may be connected with the nozzle (25) are arranged on a movable common carrier.

12. The use of a device as defined in any of Claims 5 to 11, in which the reservoirs (15, 15', 16, 16', 27, 27') have a storage capacity sufficient, for a given type of insulating glass panes to be produced, to inject strands of a compound of a length of 2 m to 3 m and of a maximum length of 5 m to 6 m without interruption into the intermediate space between two glass panels (33, 34) of the insulating glass pane.

13. The use of a device as defined in any of Claims 12 to 38, in which the pairs of arrangements, each consisting of a reservoir (15, 15', 16, 16', 27, 27') and a displacer (17, 17', 28, 28'), are designed as a single unit, in which the two reservoirs of one pair are formed by a uniform cylinder (27, 27') that comprises a piston (28, 28') which divides the cylinder (27, 27') into two storage volumes and which can be displaced by the compound, or the constituent, conveyed from a container (1, 2) during the refilling operation, or by a separate drive, especially by a servomotor (30, 30').

14. The device as defined in any of Claims 5 to 12, **characterized in that** the two reservoirs of one pair are cylinders (15, 15', 16, 16') arranged in alignment one with the other, whose pistons (17, 17') are designed as a single unit.

15. The use of a device as defined in any of Claims 5 to 14, in which identical reservoirs, especially cylinders (15, 15', 16, 16', 27, 27'), are provided for different constituents of the compound.

16. Using the device as defined in any of claims 5 to 15 for processing silicon.

## Revendications

1. Procédé d'injection d'un cordon à partir d'une masse pâteuse, dans l'espace intermédiaire entre deux plaques de verre (33, 34) d'une vitre isolante, dans lequel une buse (25) pourvue d'au moins une embouchure, installé dans l'espace intermédiaire entre les plaques de verre (33, 34), se déplace le long du rebord d'au moins l'une des deux plaques de verre et dans lequel procédé la masse pâteuse est acheminée à la buse (25) pendant ledit mouvement, dans lequel on extrude par pression cette masse ou une composante de cette masse, chacune à partir d'au moins un réservoir remplissable (15, 15', 16, 16', 27, 27'), lequel élément est relié à la buse (25) par une première voie d'acheminement, procédé **caractérisé en ce que** deux ensembles, chacun relié à la buse (25), constitués d'un réservoir (15, 15', 16, 16', 27, 27') et d'un déplaceur (17, 17', 28, 28') sont actionnés dans le sens antihoraire pour extruder ladite masse ou des composantes de ladite masse, et **en ce que**, après une pause de l'extrusion par pression, on comprime la masse ou sa composante correspondante à partir dudit réservoir (15, 15', 16, 16', 27, 27') d'une paire d'ensembles, constitués d'un réservoir (15, 15', 16, 16', 27, 27') et d'un déplaceur (17, 17', 28, 28'), contenant la quantité plus grande de la masse ou d'une de ses composantes.

2. Procédé selon la revendication 1, **caractérisé en ce que** les ensembles actionnés par paires dans le sens antihoraire sont commandés de façon synchrone à partir d'un réservoir (15, 15', 16, 16', 27, 27') et d'un déplaceur (17, 17', 28, 28').

3. Procédé selon l'une des revendications précédentes, **caractérisé en ce que** l'on détermine au préalable ladite quantité de masse ou de l'une de ses composantes requise entre deux pauses du mouvement de la buse (25) avant de la comprimer éventuellement à partir dudit réservoir (15, 15', 16, 16', 27, 27') d'une paire d'ensembles, constitués d'un réservoir (15, 15', 16, 16', 27, 27') et d'un déplaceur (17, 17', 28, 28'), lequel procédé peut se dérouler sans interruption à partir de celui-ci, en particulier à partir dudit réservoir (15, 15', 16, 16', 27, 27'), contenant la quantité plus petite de la masse ou d'une de ses composantes.

4. Procédé selon l'une des revendications précédentes, **caractérisé en ce que**, si l'on extrude par pression la masse ou une composante de la masse à partir de l'un des deux réservoirs (15, 15', 16, 16', 27, 27') d'une paire donnée, l'autre réservoir (15, 15', 16, 16', 27, 27') de ladite paire est rempli par une pompe (11, 11') à partir d'un contenant (1, 2), et l'extrusion par pression et le remplissage s'effectuent de manière synchrone.

5. Utilisation d'un dispositif équipé d'une buse (25), d'au moins un réservoir remplissable (15, 15', 16, 16', 27, 27'), lequel élément est relié à la buse (25) par une première voie d'acheminement, et peut se raccorder à un contenant (1, 2) par le biais d'une seconde voie d'acheminement, à partir de laquelle on peut remplir l'réservoir (15, 15', 16, 16', 27, 27') et pourvu d'un déplaceur (17, 17', 28, 28') engrenant dans l'réservoir (15, 15', 16, 16', 27, 27'), dont l'actionnement permet de refouler la masse ou une composante de celle-ci à partir du réservoir (15, 15', 16, 16', 27, 27') dans la première voie d'acheminement, dans lequel deux ensembles, chacun relié à la buse (25), constitués d'un réservoir (15, 15', 16, 16', 27, 27') et d'un déplaceur (17, 17', 28, 28') sont prévus et actionnés dans le sens antihoraire pour extruder ladite masse ou des composantes de ladite masse,
pour injecter un cordon à partir d'une masse pâteuse, dans l'espace intermédiaire entre deux plaques de verre (33, 34) d'une vitre isolante,
tandis que un dispositif de commande est prévu, pour commander les ensembles constitués d'un réservoir (15, 15', 16, 16', 27, 27') et d'un déplaceur (17, 17', 28, 28') de telle sorte que, après une pause de l'extrusion par pression, on comprime la masse ou sa composante correspondante à partir dudit réservoir (15, 15', 16, 16', 27, 27') d'une paire d'ensembles, constitués d'un réservoir (15, 15', 16, 16', 27, 27') et d'un déplaceur (17, 17', 28, 28'), contenant la quantité plus grande de la masse ou d'une de ses composantes.

6. Utilisation d'un dispositif selon la revendication 5, dans lequel un mélangeur dynamique (20) est aménagé entre la buse (25) et les réservoirs (15, 15', 16, 16', 27, 27').

7. Utilisation d'un dispositif selon la revendication 6, dans lequel le mélangeur dynamique (20) présente un tube mélangeur cylindrique ou en forme de tronc conique (36), dans lequel est disposé un arbre mélangeur mené (37), pourvu d'éléments mélangeurs (38) faisant saillie de l'arbre mélangeur (37).

8. Utilisation d'un dispositif selon l'une quelconque des revendications 6 ou 7, dans lequel la section d'écoulement du mélangeur (20) et sa puissance d'entraînement sont conçus pour assurer un débit de la masse pâteuse d'au moins 2 l/min, de préférence d'au moins 3 l/min.

9. Utilisation d'un dispositif selon l'une quelconque des revendications 5 ou 8, dans lequel un dispositif de commande est prévu, pour commander les ensembles constitués d'un réservoir (15, 15', 16, 16', 27, 27') et d'un déplaceur (17, 17', 28, 28') de telle sorte que l'on détermine au préalable ladite quantité de masse ou de ses composantes requise entre deux pauses du mouvement de la buse (25) avant de la comprimer éventuellement à partir dudit réservoir (15, 15', 16, 16', 27, 27') d'une paire d'ensembles, constitués d'un réservoir (15, 15', 16, 16', 27, 27') et d'un déplaceur (17, 17', 28, 28'), lequel procédé peut se dérouler sans interruption à partir de celui-ci, en particulier à partir dudit réservoir (15, 15', 16, 16', 27, 27'), contenant la réserve plus petite de la masse ou d'une de ses composantes.

10. Utilisation d'un dispositif selon l'une quelconque des revendications 5 à 9, dans lequel un dispositif de commande est prévu, pour commander les ensembles constitués d'un réservoir (15, 15', 16, 16', 27, 27') et d'un déplaceur (17, 17', 28, 28') de telle sorte que, si l'on extrude par pression la masse ou une composante de la masse à partir de l'un des deux réservoirs (15, 15', 16, 16', 27, 27') d'une paire donnée, l'autre réservoir (15, 15', 16, 16', 27, 27') de ladite paire est rempli par une pompe (11, 11') à partir d'un contenant (1, 2) en passant par une seconde voie d'acheminement, et l'extrusion par pression et le remplissage s'effectuent de manière synchrone.

11. Utilisation d'un dispositif selon l'une quelconque des revendications 5 à 10, dans lequel la buse (25) et les ensembles auxquels elle se trouve reliée, ensembles constitués d'un réservoir (15, 15', 16, 16', 27, 27') et d'un déplaceur (17, 17', 28, 28') de telle sorte de même qu'un mélangeur (20) relié à la buse (25) sont installés sur un support commun mobile.

12. Utilisation d'un dispositif selon l'une quelconque des revendications 5 à 11, dans lequel les réservoirs (15, 15', 16, 16', 27, 27') présentent un volume de stockage suffisant pour pulvériser des cordons de 2m à 3m et au maximum de 5m à 6m à partir de la masse sans interruption dans l'espace intermédiaire entre deux plaques de verre (33, 34) de la vitre isolante, et ce en fonction d'un type de vitres isolantes à fabriquer.

13. Utilisation d'un dispositif selon l'une quelconque des revendications 5 à 12, dans lequel les paires d'ensembles constitués d'un réservoir (15, 15', 16, 16', 27, 27') et d'un déplaceur (17, 17', 28, 28') sont regroupées en une seule unité, dans lequel les deux réservoirs d'une paire sont constitués d'un cylindre homogène (27, 27'), dans lequel est disposé un piston (28, 28') répartissant le cylindre (27, 27') en deux volumes de stockage, lequel piston peut se déplacer sous l'effet de la masse ou de sa composante acheminée en cas de remplissage à partir d'un contenant (1, 2) ou par un entraînement séparé, en particulier par un servomoteur (30, 30').

14. Utilisation d'un dispositif selon l'une quelconque des revendications 5 à 12, dans lequel les deux réservoirs d'une paire sont situés dans un cylindre (15, 15', 16, 16') disposé dans un même alignement, cylindre dont les pistons (17, 17') constituent une unité.

15. Utilisation d'un dispositif selon l'une quelconque des revendications 5 à 14, dans lequel des réservoirs identiques, en particulier des cylindres (15, 15', 16, 16', 27, 27') sont prévus pour des composantes différentes de la masse.

16. Utilisation d'un dispositif selon l'une quelconque des revendications 5 à 15 pour la transformation de silicone.
